# EUROPEAN PATENT APPLICATION

(11) **EP 4 019 581 A1**
(43) Date of publication of application: **29.06.2022**
(21) Application number: 21207169.0
(22) Date of filing: 09.11.2021
(51) Int. Cl.: C08L 23/04, B32B 27/32

(54) **A POLTETHYLENE FILM COMPRISED OF RECYCLED POLYETHYLENE**

(30) Priority: 24.12.2020 NL 2027220
(71) Applicant: Oerlemans Packaging B.V., 4265 GB Genderen (NL)
(72) Inventor: Verschaeren, Patrick Corneel Mathilde, Genderen (NL); Hanegraaf, Joan Antonius Adrianus Maria, Genderen (NL); Van Huijstee, Marcus Koen Joannes Maria, Genderen (NL)
(74) Representative: Arnold & Siedsma

(57) **Abstract**

The present invention relates to a polyethylene film comprised of at least one layer of recycled polyethylene comprised of a mixture of low density polyethylene, linear low density polyethylene and high density polyethylene. The present invention further relates to a method for producing a polyethylene film comprised of recycled polyethylene and the use of the polyethylene film.

## Description

The present invention relates to a polyethylene film comprised of at least one layer of recycled polyethylene comprised of a mixture of low density polyethylene, linear low density polyethylene and high density polyethylene. The present invention further relates to a method for producing a polyethylene film comprised of recycled polyethylene and the use of the polyethylene film.

Plastic has been used for many different applications for many years and polyethylene is by far the most used and produced plastic. This is due to the name due to the favourable properties of polyethylene. Polyethylene is easy to work with, and also resistant to high temperatures, impact resistance and does not splinter. Polyethylene is also food safe and is widely used for drinking water storage and transport.

Polyethylene (PE) is generally used in three forms: HDPE (high density polyethylene), LLLDPE (Linear Low Density Polyethylene) and LDPE (low density polyethylene). All these forms of PE are thermoplastic polymers and can therefore both be welded, for example, using hot air or gas, welding extruders, and welding machines. However, there is an essential difference between the three types of polyethylene. HDPE and LLDPE are produced at low pressure. This keeps the molecules intact as much as possible resulting in long polymer chains. The applications using HPDE differ from LDPE, such as water-, gas- and sewage pipes, plates, baths, swimming pools. HDPE is weldable at approximately 210 to 220 degrees Celsius.

In contrast, LDPE is produced at high pressure. The high pressure ensures that the polymer chains become highly branched, resulting in a soft plastic that is tough, strong and flexible. LDPE has a small amount of long side chains on the backbone, which reduces crystallinity and increases flexibility over HDPE. LDPE is therefore often used as agricultural film, in the production of packaging material such as film and in plastic carrier bags. Due to the highly branched molecules, the welding temperature of LDPE is lower than that of HDPE. This is also the reason that LDPE can in principle only be welded efficiently with the same type of polyethylene, i.e. LDPE.

LLDPE comprises a more linear polymer chain than LDPE. LDPE is a homopolymer constituted by ethylene monomers, whereas LLDPE is a copolymer of short ethylene monomer and longer alpha olefin monomer, which provides improve tensile strength and durability. Normal LLDPE is comprised of very short side chains, and in a greater amount in comparison to LDPE achieved by the copolymerizing of ethylene with longer olefins such as butene, hexene and / or octene. The number of comonomers determine the crystallinity, thus the density of LLDPE. A high amount of comonomers creates an amorphous rubberlike polymer. A different process is used for the production of LLDPE than for LDPE, which operates at low pressure and is very similar to the HDPE process, giving a narrower molecular weight distribution than LDPE. Because of this, and because of the lack of long branches, LLDPE flows differently than LDPE and provides stronger films than LDPE.

With environmental legislation becoming stricter and the need for a reduced carbon footprint, improved green economy and more environmental friendly products a more sustainable solution is the reuse of residual plastic material. These recycled plastics are derived from all sorts of consumer waste (post consumer regenerate) such as bottle caps, bottles and plastic bags and mainly includes a mixture of the polyethylene types HDPE, LDPE and LLDPE and only a small proportion of polypropylene (PP) and is therefore also referred to herein as recycled polyethylene (rPE). However the use of recycled polyethylene having various material properties as indicated earlier, has a negative effect on the properties of the polymer material per se. For example there is a decrease in hardness resulting in an increase in wear and tear, reduced flexibility and less impact resistance of the material and a less durable polymer. Furthermore, since rPE is a mixture polyethylene the sealing performance of the resulting polymer is negatively affected. Especially in case of the production of a polyethylene foil for the packaging, agriculture and non-food industry which often involve thin durable polymer foils where elasticity and stretchability and sealing of the foil is very important, the use of recycled polyethylene remains a challenge. At present, at least 70% LLDPE is added to the rPE to be able to produce a PE film that meets the quality criteria in respect to wear and tear resistance, flexibility and efficient sealing of the PE foil.

Considering the above, there is a need in the art for a polyethylene film that is produced from recycled polyethylene, including a mixture of polyethylene types having various material properties (HDPE, LDPE and LLDPE), while maintaining the hardness, flexibility, wear-, tear-, and impact resistance and sealing performance of the PE film. The PE film being produced of the rPE should have comparable or even improved material properties in comparison to the PE film produced using virgin, non recycled PE.

It is an object of the present invention, amongst other objects, to address the above need in the art. The object of present invention, amongst other objects, is met by the present invention as outlined in the appended claims.

Specifically, the above object, amongst other objects, is met, according to a first aspect, by the present invention by a polyethylene film comprised of at least one layer of recycled polyethylene comprised of a mixture of low density polyethylene (LDPE), linear low density polyethylene (LLDPE) and high density polyethylene (HDPE), wherein the mixture further comprises between 10 to 50 wt%, preferably 15 to 35 wt%, more preferably 20 to 30 wt% of a plastomer, wherein the plastomer has a density of at most 0.905 g/cm3, preferably at most 0.890 g/cm3, more preferably at most 0.865 g/cm3, wherein the polyethylene film has a hot seal strength at a temperature of between 120 to 160 °C of at least 1.2 N/15mm, preferably at least 1.4 N/15mm as determined in machine direction by standard test method ASTM F1921.

A plastomer is a polymer material which combines qualities of elastomers and plastics, such as rubber-like properties with the processing ability of plastic, such as ethylene-alpha olefin copolymers. The plastomer provides improved properties in terms of strength, flexibility and tear resistance in combination with the recycled polyethylene to the final PE film being produced. The excellent properties of the plastomer having a low melting point and being amorphous, result a more rapid flow of polymer chains in the melt during the heat sealing process, resulting in a heat sealing speed during production of the packaging material comprised of the PE film of present invention that is comparable to the heat sealing speed using virgin (new, non recycled) PE material to produce the packaging material. An additional advantage is that due to the more rapid flow of the plastomer, further small contaminations present in the rPE do not/hardly affect the heat sealing process because the highly movable chains also flow along the contaminants. In case the rPE mixture comprises more than 50 wt% plastomer, the resulting polyethylene film becomes too soft and too elastic to ensure the material properties in respect to hardness, flexibility, wear-, tear-, and impact resistance and sealing performance of the PE film and therefore is not suitable anymore as packaging material. When using less than 10 wt% of the plastomer in combination with the recycled polyethylene comprised of a mixture of low density polyethylene (LDPE), linear low density polyethylene (LLDPE) and high density polyethylene (HDPE) it also negatively affects the impact modification, toughness and heat sealability of the PE film and will be less suitable as packaging material. Furthermore when using plastomers having a density above 0.905, more of the plastomer has to be added to the mixture, again affecting the material properties of the resulting polyethylene film. Preferably the film of present invention comprises at most 80 wt% rPE, more preferably at most 75 wt%, more preferably at most 70 wt%.

The hot seal strength (hot tack) is determined at various seal temperatures ranging from 100 to 170 °C by using a Hot tack J&B Instruments according to standard test method ASTM F1921, approximately 0.5 seconds after sealing, before the seal has cooled. The higher the hot seal strength, the faster the process can be using the PE film in producing the packaging material that has a strong enough seal. The plastomer present in the PE film provides a rapid flow of polymer chains during the heat sealing process, resulting in an increased heat sealing speed during production of the packaging material.

Polyethylene films in general have chemically inert and nonporous surface with low surface tensions causing them to be non-receptive to bonding with printing inks or coatings. Therefore, a surface modification treatment, such as corona treatment, is needed to improve adhesion and to provide a polymer surface that is printable. However, corona treatment causes oxidation and the formation of polar keton groups on the surface of the polymer film. A polymer film surface comprised of a keton group is not compatible and meltable with an untreated polymer surface comprised of a methyl group and will not flow together to form a good heat seal. Therefore, surface treated polyethylene film surfaces are not sealable anymore and make the film stiffer and stickier. Previously patches of the PE film were not surface treated to provide for a sealable surface. However, surprisingly the PE film of present invention, due to the rPE combined with the at least 10 wt% plastomer, the surface of the PE film becomes sealable and printable again due to the plastomer properties and its rapid flow of polymer chains trough the PE film when produced.

According to a preferred embodiment, the present invention relates to the polyethylene film, wherein the polyethylene film is a single layer and the mixture comprises at least 20 wt% of a plastomer, preferably at least 25 wt%.

According to another preferred embodiment, the present invention relates to the polyethylene film, wherein the polyethylene film is comprised of at least three layers, wherein the outer layers are comprised of recycled polyethylene comprised of a mixture LDPE, LLDPE and HDPE and at least 30 wt% plastomer, preferably at least 40%. Since the PE film should be heat sealable, at least the outer layers of a multilayer PE film of present invention should be comprised of plastomer and rPE to provide a sealable and printable surface, after surface treatment such as corona treatment of the PE film.

According to yet another preferred embodiment, the present invention relates to the polyethylene film, wherein the polyethylene film is comprised of at least three layers, wherein the inner layer(s) is/are comprised of recycled polyethylene comprised of a mixture LDPE, LLDPE and HDPE and do not comprise a plastomer. The inner layer may be the core layers of the polyethylene film, and these inner or core layers do not require comprising the plastomer because the heat sealability of the polymer film is determined by the outer layers of the polyethylene film.

According to a preferred embodiment, the present invention relates to the polyethylene film, wherein the polyethylene film has a total thickness of 25 to 200 µm, preferably 50 to 125 µm, more preferably 60 to 90 µm.

According to another preferred embodiment, the present invention relates to the polyethylene film, wherein the polyethylene film has a tear resistance of at least 25 N/mm in machine direction and at least 160 N/mm in cross direction. The tear resistance determines the force needed resulting in (further) tearing of the film, according to ISO 6383-2 / ASTM D1922 using a Elmendorf tear tester.

According to another preferred embodiment, the present invention relates to the polyethylene film, wherein the polyethylene film has an impact resistance of at least 150 J/mm as determined by standard test method ASTM D4272-85.

The present invention, according to a second aspect, relates to a method for producing a polyethylene film comprised of recycled polyethylene, wherein the method comprises the steps of,
a) providing recycled polyethylene that is comprised of a mixture of low density polyethylene (LDPE), linear low density polyethylene (LLDPE) and high density polyethylene (HDPE),
b) adding and mixing 10 to 50 wt%, preferably 15 to 35 wt%, more preferably 20 to 30 wt% of a plastomer to the recycled polyethylene, wherein the plastomer has a density of at most 0.905 g/cm3, preferably at most 0.890 g/cm3, more preferably at most 0.865 g/cm3, based on the total weight of the recycled polyethylene and plastomer mixture,
c) melting of the recycled polyethylene and plastomer mixture to obtain a homogenous polymer melt,
d) extrusion and moulding of the polymer melt providing a polymer film,
e) cooling of the polymer film by air to below 100 °C to provide the polyethylene film.
In case of a multilayer polyethylene film, two or more polymer films are (co)extruded and joined together to form a single structure with multiple layers.

According to a preferred embodiment, the present invention relates to the method for producing a polyethylene film comprised of recycled polyethylene, wherein the melting is performed at 160 to 240 °C, preferably 180 to 220 °C, most preferably 195 to 205 °C, and/or wherein the melting is performed at a pressure of 200 to 500 bar, preferably 250 to 400 bar, more preferably 300 to 350 bar. At the indicated temperature and pressure the recycled polyethylene and plastomer mixture will become a homogenous mixture of the polymers having an optimal distribution of the PE types and plastomer in the polymer melt, which provides optimal material properties of the resulting PE film being produced. If the temperature and pressure are to low no optimal homogenous melt is achieved resulting in a PE film of inconsistent thickness and material properties throughout the material. If the temperature and pressure are to high, the polymer starts to degrade and oxidate and negatively affects the material properties, and furthermore the polymer melt will become to liquid to produce a PE film. The temperature and pressure ranges are even more important, since recycled polyethylene (which is a mixture of PE types) is used and therefore the material properties of the starting material are already slightly affected in comparison to native polyethylene for use in the production of PE films.

According to another preferred embodiment, the present invention relates to the method for producing a polyethylene film comprised of recycled polyethylene, wherein moulding is performed by stretching the polymer melt in both the transverse and longitudinal directions providing a polymer film. This polymer melt is moulded via air pressure and drawn upwards with for example rollers, thereby stretching the polymer melt in both the transverse and longitudinal directions. The drawing and blowing cause the polymer melt to form a thin film and aligns the polymer molecular chains in the transverse and longitudinal direction that received the highest strain (i.e by air or drawn).

According to yet another preferred embodiment, the present invention relates to the Method for producing a polyethylene film comprised of recycled polyethylene according to any of the claims 8 to 11, wherein the polymer film has a total thickness of 25 to 200 µm, preferably 50 to 125 µm, more preferably 60 to 90 µm.

The present invention, according to a further aspect, relates to the use of the polyethylene film as packaging material, such as stretch sleeves, stretchhood, tubular film, screen film, laminated film, plastic bags, and other packaging in agriculture- and food industry. The PE films for use in packaging materials are efficiently heat sealed, printed and provide a durable alternative for the packaging material being produced from new virgin PE.

The present invention will be further detailed in the following examples:

### Example

### Strength, flexibility and hot seal properties of the PE films

Polyethylene (PE) films that are comprised of recycled PE (rPE) were tested for their strength, flex and hot seal properties. The PE films comprising 50%, 75% and 93% of rPE (complemented with native PE) were tested (Table 1). Result showed that the higher the content of rPE in the film the lower the impact resistance, toughness, and sealability of the PE film is.

**Table 1. Test results on strength, flexibility and hot seal properties of rPE films.**

| | Units | **50% rPE** | **75% rPE** | **93% rPE** |
|---|---|---|---|---|
| **Thickness film** | µm | 64 | 64 | 63 |
| **E-modulus MD** | MPa | 360 | 340 | 350 |
| **E-modulus CD** | MPa | 400 | 420 | 360 |
| **Yield MD** | MPa | 12 | 12 | 12 |
| **Yield CD** | MPa | 13 | 13 | 12 |
| **Tensile strength Max Force MD** | MPa | 21 | 19 | 18 |
| **Tensile strength Max Force CD** | MPa | 25 | 23 | 20 |
| **Hot seal strength (at 100°C)** | N/15mm | 0,13 | 0,13 | 0,23 |
| **Hot seal strength (at 110°C)** | N/15mm | 1,19 | 0,70 | 0,81 |
| **Hot seal strength (at 120°C)** | N/15mm | 2,38 | 2,04 | 1,95 |
| **Hot seal strength (at 130°C)** | N/15mm | 0,69 | 1,11 | 1,10 |
| **Hot seal strength (at 140°C)** | N/15mm | 0,20 | 0,96 | 0,58 |
| **VEM Energy** | J/mm | 23 | 14 | 11 |
| **VEM Force** | N | 84 | 72 | 64 |

Thickness of the film was determined by using manual thickness gauge. The E-modulas, yield, tensile strength and strain break of the PE films were determined in CD and MD direction according to test method ISO 527-3 / ASTM D882 using a tensile bench (Instron 3365). The E-modulus was determined in relation to the elasticity of a film; the lower the value the more elastic, the higher the stiffer the film. The yield indicates the force needed to permanently deform the film material, providing an indication about stiffness, the higher the number the stiffer the material. The tensile strength indicates the force needed to be applied to an undamaged film to break the film. The strain break indicates the percentage that foil can be stretched up to the moment of breakage (often lower in MD than in CD). The tear resistance determines the force needed resulting in (further) tearing of the film, according to ISO 6383-2 / ASTM D1922 using a Elmendorf tear tester.

Furthermore, the hot seal strength (hot tack) is determined at various seal temperatures ranging by using a Hot tack J&B Instruments according to standard test method ASTM F1921, approximately 0.5 seconds after sealing, before the seal has cooled. Finally for the multiplayer films the VEM energy and VEM force were determined using a J&B Impact tester according to ASTM D4272-85. VEM energy refers to the energy needed to punch through a foil (using a dart or metal ball/bullet) to determine the impact resistance of the film. VEM force refers to the maximum force that the dart or bullet experiences of a foil while pushing through that foil to determine the toughness of the film.

In a further experiment, several PE films of present invention were tested in relation to their strength, flexibility and hot seal properties. A single layer film was tested comprised of virgin (non recycled) LLDPE (sample A) and compared to a single layer film according to present invention comprised of 85% recycled polyethylene (rPE) and 15% plastomer (sample B). Furthermore, a triple layer film was tested comprised of an inner layer of virgin LLDPE + HDPE and outer layers of virgin LLDPE (sample c) and compared to a triple film according to present invention comprised of an inner layer of 100% rPE and outer layer comprised of 70% recycled polyethylene (rPE) and 30% plastomer (sample D). Table 2 provides an overview of the test results on strength, flexibility and hot seal properties of the PE films tested.

**Table 2. Test results on strength, flexibility and hot seal properties of the PE films.**

| | Units | **Sample A** | **Sample B** | | **Sample C** | **Sample D** |
|---|---|---|---|---|---|---|
| **Thickness film** | µm | 67,3 | 73,7 | | 100 | 100 |
| **E-modulus MD** | MPa | 249,8 | 265,0 | | 440 | 320 |
| **E-modulus CD** | MPa | 345,4 | 344,8 | | 470 | 360 |
| **Yield MD** | MPa | 9,6 | 9,7 | | 16 | 12 |
| **Yield CD** | MPa | 10,8 | 10,8 | | 16 | 11 |
| **Tensile strength Max Force MD** | MPa | 22,5 | 23,9 | | 34 | 28 |
| **Tensile strength Max Force CD** | MPa | 25,7 | 25,2 | | 36 | 28 |
| **Strain break MD** | % | 269,5 | 407,6 | | 680 | 560 |
| **Strain break CD** | **%** | 651,0 | 642,2 | | 780 | 610 |
| Tear resistance MD | N/mm | 43,0 | 27,6 | | 92 | 104 |
| **Tear resistance CD** | N/mm | 154,9 | 197,7 | | 5x no break | 4x no break |
| | | | | | | |
| **Hot seal strength** | | | | | | |
| **at 100°C** | N/15mm | 0,36 | 0,29 | | - (ND) | - |
| **at 110°C** | N/15mm | 1,47 | 1,22 | | - | - |
| **at 120°C** | N/15mm | 1,88 | 2,15 | | - | - |
| **at 130°C** | N/15mm | 1,67 | 1,65 | | - | - |
| **at 140°C** | N/15mm | 1,39 | 1,75 | | - | - |
| **at 150°C** | N/15mm | 1,54 | 1,66 | | - | - |
| **at 160°C** | N/15mm | 1,18 | 1,42 | | | |
| **at 170°C** | N/15mm | 1,16 | 1,18 | | | |
| | | | | | | |
| **VEM Energy** | J/mm | - | - | | 133 | 167 |
| **VEM Force** | N | - | - | | 29 | 32 |

The plastomer in combination with the recycled rPE keeps the properties of resulting PE film of present invention at equivalent level as compared to the PE film on virgin based PE films. E-modulus, yield and tensile strength are comparable, whereas the tear resistance especially in the cross direction is improved with the PE film of present invention. Furthermore, the sealability of the PE film of present invention is improved, especially at temperatures between 120 to 160°C. Furthermore, the impact resistance of the film showed to be higher for the PE film of present invention in comparison to the virgin based PE films. Also all PE films of present invention were printable.

## Claims

1. A polyethylene film comprised of at least one layer of recycled polyethylene comprised of a mixture of low density polyethylene (LDPE), linear low density polyethylene (LLDPE) and high density polyethylene (HDPE), wherein the mixture further comprises between 10 to 50 wt%, preferably 15 to 35 wt%, more preferably 20 to 30 wt% of a plastomer, based on the total weight of the mixture, wherein the plastomer has a density of at most 0.905 g/cm3, preferably at most 0.890 g/cm3, more preferably at most 0.865 g/cm3, wherein the polyethylene film has a hot seal strength at a temperature of between 120 to 160 °C of at least 1.2 N/15mm, preferably at least 1.4 N/15mm as determined in machine direction by standard test method ASTM F1921.

2. Polyethylene film according to claim 1, wherein the polyethylene film is a single layer and the mixture comprises at least 20 wt% of a plastomer, preferably at least 25 wt%.

3. Polyethylene film according to claim 1 or 2, wherein the polyethylene film is comprised of at least three layers, wherein the outer layers are comprised of recycled polyethylene comprised of a mixture LDPE, LLDPE and HDPE and at least 30 wt% plastomer, preferably at least 40%.

4. Polyethylene film according any of the claims 1 to 3, wherein the polyethylene film is comprised of at least three layers, wherein the inner layer(s) is/are comprised of recycled polyethylene comprised of a mixture LDPE, LLDPE and HDPE and do not comprise a plastomer.

5. Polyethylene film according to any of the claims 1 to 4, wherein the polyethylene film has a total thickness of 25 to 200 µm, preferably 50 to 125 µm, more preferably 60 to 90 µm.

6. Polyethylene film according to any of the claims 1 to 5, wherein the polyethylene film has a tear resistance of at least 25 N/mm in machine direction and at least 160 N/mm in cross direction as determined by standard test method ISO 6383-2 / ASTM D1922.

7. Polyethylene film according to any of the claims 1 to 6, wherein the polyethylene film has an impact resistance of at least 150 J/mm as determined by standard test method ASTM D4272-85.

8. Method for producing a polyethylene film according to any of the claims 1 to 7 comprised of recycled polyethylene, wherein the method comprises the steps of,
a) providing recycled polyethylene that is comprised of a mixture of low density polyethylene (LDPE), linear low density polyethylene (LLDPE) and high density polyethylene (HDPE),
b) adding and mixing 10 to 50 wt%, preferably 15 to 35 wt%, more preferably 20 to 30 wt% of a plastomer to the recycled polyethylene, wherein the plastomer has a density of at most 0.905 g/cm3, preferably at most 0.890 g/cm3, more preferably at most 0.865 g/cm3, based on the total weight of the recycled polyethylene and plastomer mixture,
c) melting of the recycled polyethylene and plastomer mixture to obtain a homogenous polymer melt,
d) extrusion and moulding of the polymer melt providing a polymer film,
e) cooling of the polymer film by air to below 100 °C to provide the polyethylene film.

9. Method for producing a polyethylene film comprised of recycled polyethylene according to claim 8, wherein the melting is performed at 160 to 240 °C, preferably 180 to 220 °C, most preferably 195 to 205 °C.

10. Method for producing a polyethylene film comprised of recycled polyethylene according to claim 8 or 9, wherein the melting is performed at a pressure of 200 to 500 bar, preferably 250 to 400 bar, more preferably 300 to 350 bar.

11. Method for producing a polyethylene film comprised of recycled polyethylene according to any of the claims 8 to 10, wherein moulding is performed by stretching the polymer melt in both the transverse and longitudinal directions providing a polymer film.

12. Method for producing a polyethylene film comprised of recycled polyethylene according to any of the claims 8 to 11, wherein the polymer film has a total thickness of 25 to 200 µm, preferably 50 to 125 µm, more preferably 60 to 90 µm.

13. Use of a polyethylene film according to any of the claims 1 to 7 as packaging material, such as stretch sleeves, stretchhood, tubular film, screen film, laminated film, plastic bags, and other packaging in agriculture- and non-food industry.
